# EUROPÄISCHE PATENTSCHRIFT

(11) **EP 2 054 687 B1**
(45) Veröffentlichungstag und Bekanntmachung des Hinweises auf die Patenterteilung: **19.10.2011**
(21) Anmeldenummer: 07802497.3
(22) Anmeldetag: 06.08.2007
(51) Int. Cl.: F26B 3/08, B01J 8/24

(54) **VERFAHREN ZUR HERSTELLUNG VON TROCKENEN FREIFLIESSENDEN HYDROPHOBINZUBEREITUNGEN**
METHOD FOR THE PRODUCTION OF DRY FREE-FLOWING HYDROPHOBIN PREPARATIONS
PROCÉDÉ DE FABRICATION DE PRÉPARATIONS D'HYDROPHOBINE S'ÉCOULANT LIBREMENT, SÈCHES

(30) Priorität: 15.08.2006 EP 06118947
(43) Veröffentlichungstag der Anmeldung: 06.05.2009
(73) Patentinhaber: BASF SE, 67056 Ludwigshafen (DE)
(72) Erfinder: SCHÖNHERR, Michael, 67227 Frankenthal (DE); FAUST, Tillmann, 67256 Weisenheim (DE); RICHTER, Ulrike, 67056 Ludwigshafen (DE); SUBKOWSKI, Thomas, 68526 Ladenburg (DE); KAROS, Marvin, 67433 Neustadt (DE)
(74) Vertreter: Dörper, Thomas Michael
(86) Internationale Anmeldenummer: PCT/EP2007/058103
(87) Internationale Veröffentlichungsnummer: WO 2008/019965

(56) Entgegenhaltungen:
- WO-A-01/57076
- DD-A1- 263 790
- DE-A1- 4 119 281
- US-A- 4 617 272
- US-A1- 2006 024 417
- HEKTOR ET AL: "Hydrophobins: proteins with potential" CURRENT OPINION IN BIOTECHNOLOGY, LONDON, GB, Bd. 16, Nr. 4, August 2005 (2005-08), Seiten 434-439, XP005006169 ISSN: 0958-1669

## Beschreibung

### Beschreibung der Erfindung

Die Erfindung betrifft ein verbessertes Verfahren zur Herstellung von trockenen, freifliessenden, stabilen Hydrophobinzubereitungen durch Versprühen einer wässrigen Hydrophobinlösung in einer Sprüheinrichtung.

Die Isolierung von Hydrophobinen geschieht üblicherweise als wässrige Lösung. In dieser Form verlieren die Hydrophobine ihre Aktivität oder werden mikrobiell zersetzt und lassen sich nur unter grossem Aufwand lagern und transportieren. Deshalb ist es wünschenswert, trockene Zubereitungen von Hydrophobinen herzustellen, die das Hydrophobin unter möglichst geringem Verlust seiner spezifischen Wirkung in konzentrierter Form enthalten. Ausserdem sollen diese Zubereitungen aus Teilchen mit gut ausgebildeter Oberfläche in einer Korngrösse von 50 bis 600 µm bestehen, so dass in der weiterverarbeitenden Industrie eine homogene Mischung dieser Produkte mit anderen Stoffen oder eine gute Applizierbarkeit gewährleistet ist.

Es gibt verschiedene Sprühverfahren, um Wasser aus Enzym-haltigen wässrigen Medien zu entfernen.

In der amerikanischen Patentschrift 4,617,272 werden Enzym-haltige Medien auf in einem Fliessbett erhitzte Inertpartikel aufgesprüht.

Als geeignete Inertpartikel werden Polyolefine, Polycarbonate, Polymethylmethacrylate oder Polystyrol genannt.

Ein Nachteil dieses Verfahrens ist, dass die mittels dieser Inertpartikel hergestellten Enzym-Trockenpulver nicht in der Nahrungs- und Futtermittelindustrie eingesetzt werden können.

Nach einem anderen Verfahren, das in dem Wirtschaftspatent DD 263 790 beschrieben ist, werden Milchgerinnungsproteasenprodukte hergestellt, indem man wässrige Proteaselösungen auf Trägerstoffe, die sich in einem Wirbelschichtgranulator befinden, aufsprüht. Als Trägerstoffe werden Magermilchpulver und/oder dextrinhaltige Stoffe beschrieben.

Obwohl die erhaltenen Produkte gute Enzym-Stabilität und Rieselfähigkeit besitzen und die verwendeten Trägerstoffe physiologisch verträglich sind, hat dieses Verfahren den Nachteil, dass die bis zu 10fache Menge an Trägerstoffen, bezogen auf Enzym-Feststoff, eingesetzt werden muss.

EP 522269 beschreibt ein Verfahren zur Herstellung von trockenen, freifliessenden, stabilen Enzymzubereitungen durch Versprühen von gegebenenfalls Zusatzstoffe enthaltenden wässrigen Enzymlösungen in einer Sprüheinrichtung, dadurch gekennzeichnet, dass man die Enzymlösung unter Mitverwendung von 5 bis 60 Gew.-%, bezogen auf den Enzyrn-Feststoffgehalt der Lösung, eines Sprühhilfsmittels, bestehend aus hydrophober Kieselsäure und/oder einem Metallsalz einer höheren Fettsäure bei 0 bis 50° C versprüht und die so erhaltenen, mit Sprühhilfsmittel beladenen Teilchen trocknet.

Der Erfindung lag daher die Aufgabe zugrunde, ein Verfahren vorzuschlagen, das es gestattet, wässrige Hydrophobinlösungen in trockene, stabile Hydrophobinzubereitungen zu überführen, die in der weiterverarbeitenden Industrie eingesetzt werden können.

Gefunden wurde ein Verfahren zur Herstellung von trockenen, freifliessenden, stabilen Hydrophobinzubereitungen durch Versprühen und Trocknen von gegebenenfalls Zusatzstoffe enthaltenden wässrigen Hydrophobinlösungen in einer Sprüheinrichtung, dadurch gekennzeichnet, dass die Versprühung bei einer Zulufttemperatur zwischen 120 und 200°C erfolgt und / oder dass die Versprühung bei einer Ablufttemperatur zwischen 50 und 120°C erfolgt.

Es wurde nun gefunden, dass das eingangs definierte Verfahren zu besonders gut geeigneten Hydrophobinzubereitungen führt, wenn die gegebenenfalls Zusatzstoffe enthaltende wässrige Hydrophobinlösung unter Mitverwendung von 5 bis 200 Gew.%, bezogen auf den Hydrophobin-Feststoffgehalt der Lösung, eines Sprühhilfsmittels, bestehend aus einem oder mehreren Zuckeralkoholen versprüht und die so erhaltenen, mit Sprühhilfsmittel beladenen Teilchen getrocknet werden.

Hydrophobine sind kleine Proteine von etwa 100 AS, die charakteristisch für filamentöse Pilze sind und nicht in anderen Organismen vorkommen. Kürzlich wurden Hydrophobin-ähnliche Proteine in *Streptomyces coelicolor* entdeckt, die als "Chapline" bezeichnet werden und ebenfalls hoch oberflächenaktive Eigenschaften haben. An Wasser/Luft-Grenzflächen können sich Chapline zu Amyloid-ähnlichen Fibrillen assemblieren (Classen et al. 2003 Genes Dev 1714-1726 ; Elliot et al. 2003, Genes Dev. 17, 727-1740).

Hydrophobine sind in einer wasserunlöslichen Form auf der Oberfläche von verschiedenen pilzlichen Strukturen, wie z.B. Lufthyphen, Sporen, Fruchtkörpern, verteilt. Die Gene für Hydrophobine konnten aus Ascomyzeten, Deuteromyzeten und Basidiomyzeten isoliert werden. Einige Pilze enthalten mehr als ein Hydrophobingen, z.B. *Schizophyllum commune, Coprinus cinereus, Aspergillus nidulans.* Offensichtlich sind verschiedene Hydrophobine in unterschiedlichen Stadien der pilzlichen Entwicklung involviert. Die Hydrophobine sind dabei vermutlich verantwortlich für unterschiedliche Funktionen (van Wetter et al., 2000, Mol. Microbiol., 36, 201-210; Kershaw et al. 1998, Fungal Genet. Biol, 1998, 23, 18-33).

### Beschreibung der Erfindung

Besonders gut geeignete Hydrophobine für das erfindungsgemäße Verfahren sind Polypeptide der allgemeinen Strukturformel (I)

Xₙ-C¹-X₁₋₅₀-C²-X₀₋₅-C³-Xₚ-C⁴-X₁₋₁₀₀-C⁵-X₁₋₅₀-C⁶-X_{O-5}-C⁷-X₁₋₅₀-C⁸-Xₘ (I)

wobei X für jede der 20 natürlich vorkommenden Aminosäuren (Phe, Leu, Ser, Tyr, Cys, Trp, Pro, His, Gln, Arg, Ile Met, Thr, Asn, Lys, Val, Ala, Asp, Glu, Gly) stehen kann und die bei X stehenden Indizes die Anzahl der Aminosäuren darstellen, wobei die Indizes n und m für Zahlen zwischen 0 und 500 , bevorzugt zwischen 15 und 300, stehen, p für eine Zahl zwischen 1 und 250, bevorzugt 1-100 steht, und C für Cystein, Alanin, Serin, Glycin, Methionin oder Threonin steht, wobei mindestens vier der mit C benannten Reste für Cystein stehen, mit der Maßgabe, dass wenigstens eine der mit Xₙ oder Xₘ oder Xₚ abgekürzten Peptidsequenzen für eine mindestens 20 Aminosäuren lange Peptidsequenz steht , die natürlicherweise nicht mit einem Hydrophobin verknüpft ist,
die nach Beschichten einer Glasoberfläche eine Kontaktwinkeländerung von mindestens 20° bewirken.

Die mit C¹ bis C⁸ benannten Aminosäuren sind bevorzugt Cysteine; sie können aber auch durch andere Aminosäuren ähnlicher Raumerfüllung, bevorzugt durch Alanin, Serin, Threonin, Methionin oder Glycin ersetzt werden. Allerdings sollen mindestens vier, bevorzugt mindestens 5, besonders bevorzugt mindestens 6 und insbesondere mindestens 7 der Positionen C¹ bis C⁸ aus Cysteinen bestehen. Cysteine können in den erfindungsgemässen Proteinen entweder reduziert vorliegen oder miteinander Disulfidbrücken ausbilden. Besonders bevorzugt ist die intramolekulare Ausbildung von C-C Brücken, insbesondere die mit mindestens einer, bevorzugt 2, besonders bevorzugt 3 und ganz besonders bevorzugt 4 intramolekularen Disulfidbrücken. Bei dem oben beschriebenen Austausch von Cysteinen durch Aminosäuren ähnlicher Raumerfüllung werden vorteilhaft solche C-Positionen paarweise ausgetauscht, die intramolekulare Disulfidbrücken untereinander ausbilden können.

Falls in den mit X bezeichneten Positionen auch Cysteine, Serine, Alanine, Glycine, Methionine oder Threonine verwendet werden, kann sich die Nummerierung der einzelnen C-positionen in den allgemeinen Formeln entsprechend verändern.

Besonders vorteilhafte Polypeptide sind solche der allgemeinen Formel (II)

Xₙ-C¹-X₃₋₂₅-C²-X₀₋₂-C³-X₅₋₅₀-C⁴-X₂₋₃₅-C⁵-X₂₋₁₅-C⁶-X₀₋₂-C⁷-X₃₋₃₅-C⁸-Xₘ (II)

wobei X für jede der 20 natürlich vorkommenden Aminosäuren (Phe, Leu, Ser, Tyr, Cys, Trp, Pro, His, Gln, Arg, Ile Met, Thr, Asn, Lys, Val, Ala, Asp, Glu, Gly) stehen kann und die bei X stehenden Indizes die Anzahl der Aminosäuren darstellen, wobei die Indizes n und m für Zahlen zwischen 2 und 300 stehen und C für Cystein, Alanin, Serin, Glycin, Methionin oder Threonin steht, wobei mindestens vier der mit C benannten Reste für Cystein stehen, mit der Maßgabe, dass wenigstens eine der mit Xₙ oder Xₘ abgekürzten Peptidsequenzen für eine mindestens 35 Aminosäuren lange Peptidsequenz steht , die natürlicherweise nicht mit einem Hydrophobin verknüpft ist,
die nach Beschichten einer Glasoberfläche eine Kontaktwinkeländerung von mindestens 20° bewirken.

Die Herkunft der Hydrophobine spielt dabei keine Rolle. So können die Hydrophobine beispielsweise aus Mikroorganismen wie z.B. Bakterien, Hefen und Pilzen isoliert worden sein. Insbesondere Hydrophobine , die mittels gentechnisch veränderter Organismen gewonnen wurden, kommen erfindungsgemäß in Betracht.

Als Zusatzstoffe, die der wässrigen Hydrophobinlösung beigegeben werden können; kommen übliche, bevorzugt physiologisch unbedenkliche Materialien, in Betracht.

Hierzu zählen Polysaccharide wie Zelluloseverbindungen, Pektine und Stärken unterschiedlicher Herkunft, filmbildende Kolloide wie Gelatine, Casein oder Albumin, Mono-oder Disaccharide wie Glucose, Fructose, Lactose oder Saccharose, oder pflanzliche Produkte wie beispielsweise Weizengriesskleie oder Sojamehl.

Weiterhin können als Zusatzstoffe anorganische Materialien wie Calciumcarbonat, Tonerden, verschiedene Formen von gefällten oder mineralischen Kieselsäuren und Silikaten aber auch Produkte tierischer Herkunft, wie z.B. Eierschalenmehl, verwendet werden. Ausserdem können noch weitere Zusätze wie Emulgatoren, Antioxidantien oder Konservierungsmittel verwendet werden.

Die Menge der angewandten Zusatzstoffe beträgt in der Regel 5 bis 200 Gew.-%, bevorzugt 20 bis 200 Gew.-%, bezogen auf Hydrophobin-Feststoff.

Das erfindungsgemäße Verfahren kann folgendermaßen ausgeführt werden:

Das Sprühhilfsmittel wird zusammen mit Luft oder einem Inertgas durch Versprühen in eine Sprüheinrichtung, vorzugsweise einen Sprühturm, eingebracht. Die Zufuhr des Sprühhilfsmittels erfolgt zweckmässig oberhalb des Zerstäubungsaggregats. Als Sprühtürme kommen alle dem Fachmann bekannten Ausführungsformen in Frage (siehe z.B. K. Masters, Spray Drying Handbook, ISBN 0-582-06266-7)

Die wässrige Hydrophobinlösung kann unter Druck durch Düsen in den mit Sprühhilfsmittel beladenen Sprühraum eingebracht werden. Es ist aber auch möglich, die wässrige Hydrophobinlösung auf schnell rotierende Zerstäuberscheiben fliessen zu lassen. Die Ausbildung des Zerstäubungsaggregats hat keinen entscheidenden Einfluss auf das Produkt. Auch weitere dem Fachmann bekannte Zerstäubereinrichtungen können zum Einsatz gebracht werden (siehe z.B. Arthur H. Levebvre, Atomization and Sprays, ISBN 0-89116-603-3).

Der sich ausbildende Sprühkegel enthält eine Vielzahl kleiner Tröpfchen, die anschließend durch Wasserentzug in eine trockene Hydrophobinzubereitung überführt werden. Die Trocknung geschieht zweckmäßigerweise unmittelbar nach der Versprühung. Geeignet ist hierfür die Verdunstungstrocknung, bei der das Wasser aus den Tröpfchen mit Hilfe eines angewärmten Luft- oder Inertgasstroms entfernt wird.

Besonders bevorzugt kann zur Trocknung ein Wirbelbett verwendet werden, das sich unterhalb des Zerstäubungsaggregats oder im Bereich des Zerstäubungsaggregats befindet. Das Wirbelbett kann entweder als integraler Bestandteil eines Sprühturms betrieben werden (z.B. FSD-Technologie der Fa. Niro oder SBD-Technologie der Fa. Anhydro) oder es wird eine Trocknungstechnolgie eingesetzt die dem Fachmann als Wirbelschicht-Sprühgranulation bekannt ist und z.B. von Hans Uhlemann und Lothar Mörl im Buch "Wirbelschicht-Sprühgranulation", ISBN 3-540-66985-x, erläutert wird.

Bei besonders oxidationsempfindlichen Hydrophobinen wird die Verwendung von Inertgas, wie z.B. Stickstoff, bei der Versprühung und der Trocknung bevorzugt.

Die mit diesem Verfahren hergestellten Hydrophobinzubereitungen zeichnen sich durch ihre gute Stabilität und durch einen geringen Restfeuchtegehalt aus. Die Restfeuchte beträgt weniger als 10 %, bezogen auf Festsubstanz, gemessen nach Karl-Fischer-Tritration, vorzugsweise ist sie kleiner 7%, besonders bevorzugt werden Restfeuchtegehalte kleiner 5%.

Die mittlere Partikelgröße, gemessen mittel Laserbeugung liegt im Bereich von 10 Mikrometer bis 3 mm, bevorzugt werden mittlere Partikelgrößen im Bereich von 100 Mikrometer bis 1 mm Insbesondere ist der Anteil an Partikeln mit einer Größe kleiner 50 Mikrometer zu beschränken, da diese Feinfraktion zur unerwünschten Staubbildung bei der Handhabung neigt. Besonders bevorzugt werden Feststoffe mit einem Anteil von Partikeln kleiner 50 Mikrometer von weniger als 5 Massen%.

Das Schüttgewicht der trockenen Hydrophobinzubereitung liegt im Bereich von 50 bis 1200 kg/m³. Für Sprühtrocknungsverfahren im Sprühturm werden Schüttgewichte von 80 bis 400 kg/m³ bevorzugt, besonders bevorzugt von 100 bis 300 kg/m³. Bei der Wirbelschicht-Sprühgranulation werden Schüttgewichte von 500 bis 1000 kg/m³ bevorzugt, besonders bevorzugt von 600 bis 800 kg/m³.

Die Temperatur der zu zerstäubenden Lösung soll üblicherweise 0 bis 150° C betragen. Bei Hydrophobinen, die leicht durch Wärme inaktiviert werden, werden bevorzugt Temperaturen von 0 - 80° C verwendet, bei Hitze-stabilen Hydrophobinen wird eine Temperatur von 20 bis 100° C bevorzugt verwendet.

Als Sprühhilfsmittel kommen Zuckeralkohole in Betracht. Besonders geeignete Zuckeralkohole sind Sorbit, Mannit und Inosit. Desweiteren kommt Zellulose, Stärke, und Maisstärkeals Trocknungshilfsstoff in Betracht.

Die Gewichtsmenge an Sprühhilfsmittel beträgt 5 bis 200 Gew.-%, bevorzugt 20 bis 200Gew.-%, und besonders bevorzugt 70 bis 130 Gew.-%, bezogen auf Hydrophobin-Feststoff.

Durch das direkte Einbringen des Sprühhilfsmittels in die Sprühzone wird die mechanische Beanspruchung der Partikel weitgehend vermieden, die beispielsweise von einem Träger-gefüllten Fliessbett ausgeht.

Die Hydrophobinzubereitungen können auch ohne Verwendung von Sprühhilfsmitteln mit gutem Erfolg hergestellt werden.

Im einzelnen ist das neue Verfahren in den folgenden Beispielen beschrieben.

### Allgemein

### Bezeichnungen

| | |
|---|---|
| Hydrophobn A: | YaaD-DewA-His6 |
| Hydrophobin B: | 40 AS YaaD-DewA-His6 |
| Trockensubstanzgehalt: | TS [gew- %] |

### Aktivitätstest

Zur Beurteilung der Proteinaktivität werden die Beschichtungseigenschaften des wiedergelösten sprühgetrockneten bzw. sprühgranulierten Hydrophobinfusionsproteins herangezogen. Die Evaluierung der Beschichtungseigenschaften wird bevorzugt auf Glas bzw. Teflon als Modelle für hydrophile bzw. hydrophobe Oberflächen vorgenommen.

### Standard-Versuche für Beschichtung

### Glas:

- Konzentration Hydrophobin: 50 mg/L
- Inkubation von Glasplättchen über Nacht (Temperatur: 80°C) in 10mM Tris pH8
- nach Beschichtung waschen in VE-Wasser
- danach Inkubation 10min / 80°C / 1% SDS
- waschen in VE-Wasser

### Teflon:

- Konzentration: 50 mg/L
- Inkubation von Teflonplättchen über Nacht (Temperatur: 80°C) in 10mM Tris pH 8
- nach Beschichtung waschen in VE-Wasser
- Inkubation 10min / 80°C / 0,1% Tween 20
- waschen in VE-Wasser
- danach Inkubation 10min / 80°C / 1% SDS
- waschen in VE-Wasser

Die Proben werden an der Luft getrocknet und der Kontaktwinkel (in Grad) eines Tropfens von 5 µl Wasser bestimmt. Es ergeben sich z.B. folgende Werte:

Ansatz mit -YaaD-DewA Fusionsprotein (Kontrolle: ohne Protein; --:YaaD-DewA-HiS₆ 100 mg/L gereinigter Fusionspartner):

| | nach 1 %SDS 80°C | |
|---|---|---|
| | Teflon | Glas |
| Kontrolle | 96,8 | 30 |
| YaaD | 97,4 | 38,7 |
| 50 mg/L | 85,9 | 77,9 |

### Fermentation und Aufarbeitung

200ml Komplexmedium werden in einem 1000 mL Erlenmeyerkolben mit zwei Seitenschikanen werden mit einem YaaD-DewA-His6 oder 40 AS YaaD-DewA-His6 exprimierenden *E.coli* Stamm von LB-Amp Platte (100µg/ml Ampicillin) inokuliert (=erste Vorkultur). Der Stamm wird bis zu einer OD₆₀₀ₙₘ von ca 3,5 bei 37°C auf einem Schüttler mit dₒ= 2,5 cm bei 200 rpm inkubiert. Im Anschluss werden 4 weitere 1000 mL Erlenmeyerkolben mit Schikanen (jeweils mit 200 mL Komplexmedium) mit jeweils 1 mL der ersten Vorkultur beimpft und bei 37°C im Schüttelschrank (dₒ= 2,5 cm, n = 200 rpm) inkubiert (= 2. Vorkultur). Sobald die OD₆₀₀ₙₘ > 6 ist, wird der mit Komplexmedium gefüllte Vorfermenter aus dieser zweiten Schüttelkultur beimpft. Nach erreichen einer OD₆₀₀ₙₘ > 9 oder OTR = 80 mmol/(I·h), wird der Hauptfermenter beimpft. Die Hauptkultur wird im Fed-Batch Verfahren in mineralischem Medium mit sehr geringen Mengen komplexer Bestandteile gefahren. Bei einer OD₆₀₀ₙₘ > 70 werden die Zellen mit 50 µm IPTG induziert. Nach einer Induktionszeit zwischen 4 und 20h wird die Fermentation abgebrochen und der Kesselinhalt auf 4 °C gekühlt. Die Zellen werden im Anschluss an die Fermentations z.B. mittels eines Tellerseparators (z.B. Düsenseparators) oder durch Mikrofiltration von der Fermentationsbrühe abgetrennt und in VE-Wasser resuspendiert. Nach erneuter Separation durch Einsatz eines Tellerseparators oder einer Mikrofiltration werden die erneut resuspendierten Zellen durch Einsatz eines Hochdruckhomogenisators bei einem Differenzdruck von 2000 bar aufgeschlossen. Das Homogenisat wird mittels eines Tellerseparators (z.B. Düsenseparator) abgetrennt und mehrfach gewaschen. Das erhaltene Konzentrat wird auf pH 12,5 eingestellt. Nach ca. 15 min. wird der pH auf 9 abgesenkt. Die neutralisierte Hydrophobin-haltige Lösung wird zur Feststoffabtrennung über eine Röhrenzentrifuge gefahren. Gemäß SDS-PAGE Analyse ist das Hydrophobin nach der abschliessenden Zentrifugation im Überstand enthalten. Dieser Überstand wird im folgenden als "wässrige Hydrophobin-Lösung bezeichnet". Der Trockensubstanzgehalt der wässrigen Hydrophobin-Lösung beträgt üblicherweise 2-4 gew-%. Die mittels ELISA bestimmte Hydrophobinkonzentration liegt auf dieser Stufe typischerweise im Bereich 4-35 g/L.

### Beispiel 1

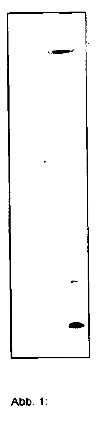

In 866 kg wässrige Hydrophobin A-Lösung mit einem Feststoffgehalt von 3,4 gew- % werden 28,6 kg Mannit eingerührt. Die Lösung wird mit einer Zweistoffdüse Typ Gerig Gr.O mit einer Einsprührate von 41 kg/h in 1200 kg/h Stickstoff im Gleichstrom versprüht. Der Sprühturm hat einen Durchmesser von 800 mm und eine Höhe von 12 m. Die Eintrittstemperatur des Trocknungsgases beträgt dabei 161 DEG. Die Austrittstemperatur des Trocknungsgases beträgt 80 DEG. Die Abscheidung erfolgt im Filter, in welchem 31,7 kg Trockengut wiedergefunden werden. Aus dem Turm werden 6,1 kg Trockengut ausgekehrt. Die aus dem Aktivitätstest resultierenden Kontaktwinkel des wiedergelösten Hydrophobin-haltigen Trockenguts sind in Tab. 1 aufgeführt. Das Proteingel des wiedergelösten Trockenguts ist in Abb.1 dargestellt.

### Beispiel 2

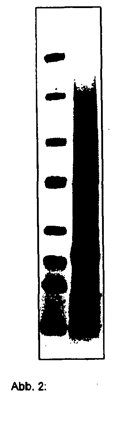

In 109 kg wässrige Hydrophobin B-Lösung mit einem Feststoffgehalt von 2,4 gew- % und einer Hydrophobinkonzentration von 4,5 g/L werden 2,4 kg Mannit eingerührt. Die Lösung wird mit einer 3mm Niro-Zweistoffdüse mit einer Einsprührate von 12,8 kg/h in 450 kg/h Stickstoff im Gleichstrom versprüht. Der Sprühturm (Hersteller Fa. Niro) hat einen Durchmesser von 1200 mm und eine zylindrische Höhe von 2650 mm. Die Höhe des konischen Teils beträgt 600 mm. Die Eintrittstemperatur des Trocknungsgases beträgt 163 DEG. Die Austrittstemperatur des Trocknungsgases beträgt 79 DEG. Im Zyklonaustrag werden 4,1 kg Trockengut wiedergefunden. Im nachgeschalteten Filteraustrag werden 0,73 kg Trockengut wiedergefunden. Die aus dem Aktivitätstest resultierenden Kontaktwinkel des wiedergelösten Hydrophobin-haltigen Trockenguts sind in Tab. 2 aufgeführt. Das Proteingel des wiedergelösten Trockenguts ist in Abb.2 dargestellt.

### Beispiel 3

In 155 kg wässrige Hydrophobin A-Lösung mit einem Feststoffgehalt von 3,4 gew- % und einem Hydrophobingehalt von 31 g/L werden 5,4 kg Natriumsulfat eingerührt. Die Lösung wird mit einer Einsprührate von 12,2 kg/h über eine 3 mm Niro Zweistoffdüse in 450 kg/h Stickstoff im Gleichstrom versprüht. Der Sprühturm (Hersteller Fa. NIRO) hat einen Durchmesser von 1200 mm und eine zylindrische Höhe von 2650 mm. Die Höhe des konischen Teils beträgt 600 mm. Die Eintrittstemperatur des Trocknungsgases beträgt dabei 165 DEG. Die Austrittstemperatur des Trocknungsgases beträgt 84 DEG. Im Zyklonaustrag werden 5,5 kg Trockengut wiedergefunden.

### Beispiel 4

In 2 L wässrige Hydrophobin B-Lösung mit einem Trockensubstanzgehalt von 20 g/L werden 40 g Natriumsulfat eingerührt. Die Lösung wird in einem Büchi Laborsprühtrockner mit Stickstoff als Trocknungsgas getrocknet. Die Gaseintrittstemperatur beträgt 160 DEG. Die Gasaustrittstemperatur beträgt 80 °C. Im Zyklonaustrag werden 40 g wiedergefunden. Die resultierenden Kontaktwinkel des wiedergelösten Trockenguts sind in Tab. 3 aufgeführt.

### Beispiel 5

In 2 L wässrige Hydrophobin B-Lösung mit einem Trockensubstanzgehalt von 20 g/L werden 40 g Maltodextrin eingerührt. Die Lösung wird in einem Büchi Laborsprühtrockner mit Stickstoff als Trocknungsgas getrocknet. Die Gaseintrittstemperatur beträgt 160 DEG. Die Gasaustrittstemperatur beträgt 80 °C. Im Zyklonaustrag werden 39 g wiedergefunden. Die resultierenden Kontaktwinkel des wiedergelösten Trockenguts sind in Tab. 4 aufgeführt.

### Beispiel 6

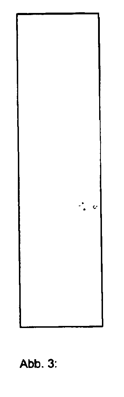

240 kg wässrige Hydrophobin A-Lösung (TS = 3,4 gew-%, Hydrophobinkonzentration 31 g/L) werden aufkonzentriert. Es resultieren 65 kg wässrige Hydrophobin A-Lösung mit einem Feststoffgehalt von 13 gew- % und einem Hydrophobingehalt von 117 g/L. Diese aufkonzentrierte Lösung wird mit einer Einsprührate von 13,7 kg/h über eine 3 mm Niro Zweistoffdüse in 450 kg/h Stickstoff versprüht. Der Sprühturm (Hersteller Fa. NIRO) hat einen Durchmesser von 1200 mm und eine zylindrische Höhe von 2650 mm. Die Höhe des konischen Teils beträgt 600 mm. Die Eintrittstemperatur des Trocknungsgases beträgt dabei 165 DEG. Die Austrittstemperatur des Trocknungsgases beträgt 84 DEG. Im Zyklonaustrag werden 6,1 kg Trockengut wiedergefunden. Die aus dem Aktivitätstest resultierenden Kontaktwinkel des wiedergelösten Hydrophobin-haltigen Trockenguts sind in Tab. 5 aufgeführt. Das Proteingel des wiedergelösten Trockenguts ist in Abb. 3 dargestellt.

### Beispiel 7

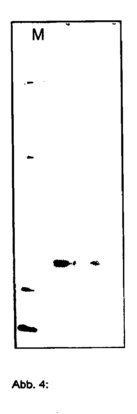

894 kg wässrige Hydrophobin B-Lösung (TS = 2,4 gew-%, Hydrophobinkonzentration 6,3 g/L) werden aufkonzentriert. Es resultieren 226 kg aufkonzentrierte wässrige Hydrophobin B-Lösung (TS = 9,7 gew-%, Hydrophobinkonzentration 35,4 g/L). 75 kg dieser aufkonzentrierten wässrigen Hydrophobin B-Lösung mit einem Feststoffgehalt von 9,6 % (Hydrophobingehalt ca. 35,4 g/L) wird mit einer Temperatur von 25 DEG mit einer Einstoffdüse (Niro) mit einem Durchmesser von 2 mm mit einer Einsprührate von 13,6 kg/h in 450 kg/h Stickstoff im Gleichstrom versprüht. Der Sprühturm (Hersteller Fa. NIRO) hat einen Durchmesser von 1200 mm und eine zylindrische Höhe von 2650 mm. Die Höhe des konischen Teils beträgt 600 mm. Die Eintrittstemperatur des Trocknungsgases beträgt dabei 168 DEG. Die Austrittstemperatur des Trocknungsgases beträgt 84 DEG. Im Zyklon wurden 5 kg und im Filter 1,2 kg Produkt wiedergefunden. Das sprühgetrocknete Material hat eine Schüttdichte von 100 kg/m³. Die Reinheit des resultierenden Materials, die als prozentualer Anteil von Hydrophobin- zu Gesamtproteinkonzentration definiert wird, beträgt 45 %. Die aus dem Aktivitätstest resultierenden Kontaktwinkel des wiedergelösten Hydrophobin-haltigen Trockenguts sind in Tab. 6 aufgeführt. Das Proteingel des wiedergelösten Trockenguts ist in Abb. 4 dargestellt.

### Beispiel 8

921 kg wässrige Hydrophobin A-Lösung (TS = 2,3 gew-%, Hydropbobinkonzentration von 18 g/L) werden aufkonzentriert. Es resultieren 241 kg aufkonzentrierte wässrige Hydrophobin A-Lösung (TS = 9,6 gew-%, Hydrophobinkonzentration 98,3 g/L). Diese aufkonzentrierte wässrige Hydrophobin A-Lösung wird einem Sprühwirbelbett (d = 150 mm, A = 0,177 m²) unter Vorlage von getrockneten Hydrophobin A zugeführt. Die Versprühung der aufkonzentrierten wässrigen Hydrophobin A-Lösung erfolgt über eine 2-Stoffdüse mit einem Durchmesser von 2 mm.

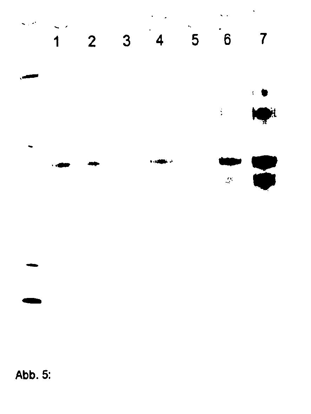

**Teil 1:** Es werden 2 kg Hydrophobin A aus Beispiel 4 vorgelegt. Die Einsprührate der konzentrierten wässrigen Hydrophobin A-Lösung (= Zulauf 1) wird in den Schritten 1,8 kg/h; 2,5 kg/h; 3,3 kg/h gesteigert. Die Gaseintrittstemperatur bei einer Produkteinsprührate von 3,3 kg/h beträgt 138 DEG und der dazugehörige Trocknungsgasstrom (Luft) 75 m³/h. Die mittlere Produktaustrittstemperatur im unteren Bereich der Sprühwirbelschicht beträgt 69 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 5,9 kg des Zulaufs 1 resultieren 0,44 kg Trockengut (Probe 1, Abb. 5).

**Teil 2:** Auf das im Wirbelbett verbleibende Trockengut aus Teil 1 (1,5 kg, Korngrösse der Vorlage < 1,25 mm) wird konzentrierte wässrige Hydrophobin A-Lösung (= Zulauf 2) mit einer Einsprührate von 3,2 kg/h versprüht. Die mittlere Gaseintrittstemperatur beträgt 126 DEG und der dazugehörige Trocknungsgasstrom (Luft) 102 m³/h. Die mittlere Produktaustrittstemperatur im unteren Bereich der Sprühwirbelschicht beträgt 67 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 21,3 kg des Zulaufs 2 resultieren 1,6 kg Trockengut (Probe 2, Abb. 5).

**Teil 3:** Auf das im Wirbelbett verbleibende Trockengut aus Teil 2 (1,3 kg) wird konzentrierte wässrige Hydrophobin A-Lösung (= Zulauf 3) mit einer Einsprührate von 3,6 kg/h versprüht gesetzt. Die mittlere Gaseintrittstemperatur beträgt 143 DEG und der dazugehörige Trocknungsgasstrom (Luft) 102 m³/h. Die mittlere Produktaustrittstemperatur im unteren Bereich der Sprühwirbelschicht beträgt 67 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 21,6 kg des Zulaufs 3 resultieren 1,6 kg Trockengut (Probe 3, Abb.5).

**Teil 4:** Auf das im Wirbelbett verbleibende Trockengut aus Teil 3 (1,9 kg, Korngrösse der Vorlage < 1,6 mm) wird konzentrierte wässrige Hydrophobin A-Lösung (= Zulauf 4) mit einer Einsprührate von 4,1 kg/h versprüht. Die mittlere Gaseintrittstemperatur beträgt 147 DEG und der dazugehörige Trocknungsgasstrom (Luft) 100 m³/h. Die mittlere Produktaustrittstemperatur im unteren Bereich der Sprühwirbelschicht beträgt 66 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 24,6 kg des Zulaufs 4 resultieren 1,9 kg Trockengut (Probe 4, Abb. 5).

**Teil 5:** Auf das im Wirbelbett verbleibende Trockengut aus Teil 4 (1,3 kg, Korngrösse der Vorlage < 1,4 mm) wird konzentrierte wässrige Hydrophobin A-Lösung (= Zulauf 5) mit einer Einsprührate von 4 kg/h versprüht. Die mittlere Gaseintrittstemperatur beträgt 146 DEG und der dazugehörige Trocknungsgasstrom (Luft) 99 m³/h. Die mittlere Produktaustrittstemperatur im unteren Bereich der Sprühwirbelschicht beträgt 67 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 23 kg des Zulaufs 5 resultieren 1,7 kg Trockengut (Probe 5, Abb.5).

**Teil 6:** Auf das im Wirbelbett verbleibende Trockengut aus Teil 5 (1,1 kg, Korngrösse der Vorlage < 1,25 mm) wird konzentrierte wässrige Hydrophobin A-Lösung (= Zulauf 6) mit einer Einsprührate von 3,5 kg/h versprüht. Die mittlere Gaseintrittstemperatur beträgt 142 DEG und der dazugehörige Trocknungsgasstrom (Luft) 101 m³/h. Die mittlere Produktaustrittstemperatur im unteren Bereich der Sprühwirbelschicht beträgt 71 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 26,8 kg des Zulaufs 6 resultieren 2 kg Trockengut (Probe 6, Abb.5). Das Schüttgewicht der Nutzfraktion beträgt 0,65 kg/L.

**Teil 7**: Auf das im Wirbelbett verbleibende Trockengut aus Teil 6 (1,2 kg, Korngrösse der Vorlage < 1,25 mm) wird konzentrierte wässrige Hydrophobin A-Lösung (= Zulauf 7) mit einer Einsprührate von 3,7 kg/h versprüht. Die mittlere Gaseintrittstemperatur beträgt 141 DEG und der dazugehörige Trocknungsgasstrom (Luft) 99 m³/h. Die mittlere Produktaustrittstemperatur im unteren Bereich der Sprühwirbelschicht beträgt 72 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 22,7 kg des Zulaufs 7 resultieren 1,7 kg Trockengut (Probe 7, Abb.5). Das Schüttgewicht der Nutzfraktion beträgt 0,65 kg/L. Die Fraktion zwischen 0,2-0,72 mm Korngröße beträgt 98,9%.

Für die Mahlung des Grobguts in diesem Beispiel ist neben dem Einsatz des Kornschneiders ein Walzenstuhl oder einer Mühle o.ä. geeignet.

Die aus dem Aktivitätstest resultierenden Kontaktwinkel des wiedergelösten Hydrophobin-haltigen Trockenguts sind in Tab. 7 aufgeführt. Das Proteingel des wiedergelösten Trockenguts ist in Abb. 5 dargestellt.

### Beispiel 9

894 kg wässrige Hydrophobin B-Lösung (TS = 2,4 gew-%, Hydrophobinkonzentration 6,3 g/L) werden aufkonzentriert. Es resultieren 226 kg aufkonzentrierte wässrige Hydrophobin B-Lösung (TS = 9,7 gew-%, Hydrophobinkonzentration 35,4 g/L).

**Teil 1:** Es werden 1 kg des Hydrophobin B-haltigen Trockengutes aus einer Sprühtrocknung analog zu Beispiel 5 vorgelegt. Die Gaseintrittstemperatur beträgt 141 DEG und der dazugehörige Trocknungsgasstrom (Luft) 49 m³/h. Die mittlere Produktaustrittstemperatur im unteren Bereich der Sprühwirbelschicht beträgt 69 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 5 kg des Zulaufs 1 resultieren 0,46 kg Trockengut.

**Teil 2:** Auf das im Wirbelbett verbleibende Trockengut aus Teil 1 (0,87 kg, Korngrösse < 0,8 mm) wird konzentrierte wässrige Hydrophobin B-Lösung (= Zulauf 2) mit einer Einsprührate von 3,8 kg/h versprüht. Die Gaseintrittstemperatur beträgt 139 DEG und der dazugehörige Trocknungsgasstrom (Luft) 99 m³/h. Die mittlere Produktaustrittstemperatur im unteren Bereich der Sprühwirbelschicht beträgt 67 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 22,8 kg des Zulaufs 2 resultieren 2,1 kg Trockengut. Die Fraktion < 0,4 mm beträgt ca. 80 %.

**Teil 3** Auf das im Wirbelbett verbleibende Trockengut aus Teil 2 (0,87 kg, Korngrösse < 0,8 mm) wird konzentrierte wässrige Hydrophobin B-Lösung (= Zulauf 3) mit einer Einsprührate von 3,8 kg/h versprüht. Die Gaseintrittstemperatur beträgt 140 DEG und der dazugehörige Trocknungsgasstrom (Luft) 102 m³/h. Die mittlere Produktaustrittstemperatur im unteren Bereich der Sprühwirbelschicht beträgt 69 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 30,1 kg des Zulaufs 3 resultieren 2,78 kg Trockengut. Die Fraktion zwischen 0,4-0,8 mm beträgt 80%.

**Teil 4**: Auf das im Wirbelbett verbleibende Trockengut aus Teil 3 (1,1 kg, Korngrösse < 0,8 mm) wird konzentrierte wässrige Hydrophobin B-Lösung (= Zulauf 4) mit einer Einsprührate von 3,5 kg/h versprüht. Die Gaseintrittstemperatur beträgt 142 DEG und der dazugehörige Trocknungsgasstrom (Luft) 96 m³/h. Die mittlere Produktaustrittstemperatur im unteren Bereich der Sprühwirbelschicht beträgt 72 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 25,9 kg des Zulaufs 4 resultieren 2,4 kg Trockengut. Die Fraktion von 0,4-0,8 mm umfasst ca. 80 %.

**Teil 5:** uf das im Wirbelbett verbleibende Trockengut aus Teil 4 (1,1 kg, Korngrösse < 0,8 mm) wird konzentrierte wässrige Hydrophobin B-Lösung (= Zulauf 5) mit einer Einsprührate von 3,4 kg/h versprüht. Die Gaseintrittstemperatur beträgt 139 DEG und der dazugehörige Trocknungsgasstrom (Stickstoff) 99 m³/h. Die mittlere Produktaustrittstemperatur im unteren Bereich der Sprühwirbelschicht beträgt 72 DEG. Aus 26,6 kg des Zulaufs 5 resultieren 2,5 kg Trockengut. Das Granulat wird über eine Austragsschnecke kontinuierlich ausgetragen. Die Korngröße wird über die Siebung des Austrags und entsprechender Mahlung des Grobguts in einem Kornschneider gesteuert. Die Fraktion von 0,2-0,8 mm umfasst ca. 98 %.

**Teil 6:** Auf das im Wirbelbett verbleibende Trockengut aus Teil 5 (1,1 kg, Korngrösse < 0,8 mm) wird konzentrierte wässrige Hydrophobin B-Lösung (= Zulauf 6) mit einer Einsprührate von 3,4 kg/h versprüht. Die Gaseintrittstemperatur beträgt 142 DEG und der dazugehörige Trocknungsgasstrom (Stickstoff) 98 m³/h. Die mittlere Produktaustrittstemperatur im unteren Bereich der Sprühwirbelschicht beträgt 72 DEG. Aus 25,4 kg des Zulaufs 6 resultieren 2,4 kg Trockengut. Das Granulat wird über eine Austragsschnecke kontinuierlich ausgetragen. Die Korngröße wird über die Siebung des Austrags und entsprechender Mahlung des Grobguts in einem Kornschneider gesteuert. Die Fraktion von 0,2-0,8 mm umfasst 91-95%. Das Schüttgewicht der Probe beträgt 0,57 kg/L.

**Teil 7**: Auf das im Wirbelbett verbleibende Trockengut aus Teil 6 (1,4 kg, Korngrösse < 0,8 mm) wird konzentrierte wässrige Hydrophobin B-Lösung (= Zulauf 7) mit einer Einsprührate von 3,4 kg/h versprüht. Die Gaseintrittstemperatur beträgt 140 DEG und der dazugehörige Trocknungsgasstrom (Stickstoff) 100 m³/h. Die mittlere Produktaustrittstemperatur im unteren Bereich der Sprühwirbelschicht beträgt 72 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 18,4 kg des Zulaufs 7 resultieren 1,8 kg Trockengut. Die Fraktion von 0,2-0,4 mm ist > 0,64 kg/L.

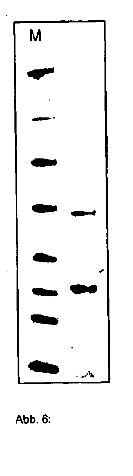

**Teil 8:** Auf das im Wirbelbett verbleibende Trockengut aus Teil 7 (1,2kg, Korngrösse < 0,8 mm) wird konzentrierte wässrige Hydrophobin B-Lösung (= Zulauf 8) mit einer Einsprührate zwischen 3 und 2,5 kg/h versprüht. Die Gaseintrittstemperatur beträgt 120 DEG und der dazugehörige Trocknungsgasstrom (Stickstoff) 100 m³/h. Die mittlere Produktaustrittstemperatur im unteren Bereich der Sprühwirbelschicht beträgt 67 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 21,5 kg des Zulaufs 8 resultieren 2,1 kg Trockengut (Abb. 6). Der Anteil der Fraktion zwischen 0,2-0,4 mm ist >70,5%.

**Teil 9:** Auf das im Wirbelbett verbleibende Trockengut aus Teil 8 (1,2 kg, Korngrösse < 0,8 mm) wird konzentrierte wässrige Hydrophobin B-Lösung (= Zulauf 3) mit einer Einsprührate von 4,1-4,4 kg/h versprüht. Die Gaseintrittstemperatur beträgt 163 DEG und der dazugehörige Trocknungsgasstrom (Stickstoff) 97 m³/h. Die mittlere Produktaustrittstemperatur im unteren Bereich der Sprühwirbelschicht beträgt 77 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 29,6 kg des Zulaufs 9 resultieren 2,8 kg Trockengut. Der Anteil der Fraktion zwischen 0,2-0,4 mm beträgt 14,8 %.

**Teil 10:** Es werden 1,3 kg des unter Teil 9 gemahlenen Grobguts zusammen mit dem Feingut vorgelegt (Korngrösse der Vorlage < 0,8 mm). Die Einsprührate der konzentrierten wässrigen Hydrophobin B-Lösung (= Zulauf 10) wird variiert zwischen 4,9 und 5,1 kg/h. Die Gaseintrittstemperatur beträgt 181 DEG und der dazugehörige Trocknungsgasstrom (Stickstoff) 95 m³/h. Die mittlere Produktaustrittstemperatur im unteren Bereich der Sprühwirbelschicht beträgt 82 DEG. Das Granulat wird über eine Austragsschnecke kontinuierlich ausgetragen. Die Korngröße wird über die Siebung des Austrags und entsprechender Mahlung des Grobguts in einem Kornschneider gesteuert. Aus 43,1 kg des Zulaufs 10 resultieren 4,1 kg Trockengut (Probe 10, Abb. 6). Der Anteil der Fraktion zwischen 0,2-0,4 mm beträgt 12,6 %.

Die aus dem Aktivitätstest resultierenden Kontaktwinkel des wiedergelösten Hydrophobin-haltigen Trockenguts der Endprobe (Teil 10) sind in Tab. 8 aufgeführt. Das Proteingel des wiedergelösten Trockenguts ist in Abb. 6 dargestellt.

**Tab. 1: Kontaktwinkel nach Sprühtrocknung von Hydrophobin A mit Mannit.**

| | **Glas** | **Teflon** |
|---|---|---|
| **Kontrolle** | 20,5 | 108,2 |
| **Beispiel 1** | 66,2 | 85,5 |

**Tab. 2: Kontaktwinkel nach Sprühtrocknung von Hydrophobin B mit Mannit.**

| | **Glas** | **Teflon** |
|---|---|---|
| **Kontrolle** | 21,1 | 108,6 |
| **Beispiel 2** | 68,3 | 78,2 |

**Tab. 3: Kontaktwinkel nach Sprühtrocknung von Hydrophobin A mit Natriumsulfat.**

| | **Glas** | **Teflon** |
|---|---|---|
| **Kontrolle** | 15 | 110,8 |
| **Beispiel 4** | 64,9 | 86,3 |

**Tab. 4: Kontaktwinkel nach Sprühtrocknung von Hydrophobin A mit Maltodextrin.**

| | **Glas** | **Teflon** |
|---|---|---|
| **Kontrolle** | 15 | 110,8 |
| **Beispiel 5** | 65,7 | 85,7 |

**Tab. 5: Kontaktwinkel nach Sprühtrocknung von Hydrophobin A ohne Hilfsstoff.**

| | **Glas** | **Teflon** |
|---|---|---|
| **Kontrolle** | 15,5 | 107 |
| **Beispiel 6** | 65,9 | 85,6 |

**Tab. 6: Kontaktwinkel nach Sprühtrocknung von Hydrophobin B ohne Hilfsstoff.**

| | **Glas** | **Teflon** |
|---|---|---|
| **Kontrolle** | 32,8 | 96,2 |
| **Beispiel 7** | 69,6 | 74,8 |

**Tab. 7: Kontaktwinkel nach Sprühgranulierung von Hydrophobin A ohne Hilfsstoff.**

| **Beispiel 8** | **Glas** | **Teflon** |
|---|---|---|
| **Kontrolle** | 13 | 97,8 |
| **Teil 1** | 60,7 | 75,9 |
| **Teil 2** | 62,2 | 81,2 |
| **Teil 3** | 60,5 | 81,9 |
| **Teil 4** | 60,9 | 62,5 |
| **Teil 5** | 58,9 | 70,1 |
| **Teil 6** | 60 | 72,5 |
| **Teil 7** | 59,3 | 72,9 |

**Tab 8: Kontaktwinkel nach Sprühgranulierung von Hydrophobin B ohne Hilfsstoff.**

| | **Glas** | **Teflon** |
|---|---|---|
| **Kontrolle** | 23,3 | 100,8 |
| **Beispiel 9, Endprobe, Teil 10** | 72,1 | 69,7 |

### Erläuterung der Abbildungen:

### Abb. 1: Proteingel Beispiel 1:

4-12% Bis-Tris Gel/MES Puffer, **links:** nach Sprühtrocknung von Hyrophobin A mit Mannit, **rechts:** Marker: Prestained SDS-Page Standards, Auftrag/Slot: 15 µg Pr, Abb. 2: Proteingel Beispiel 2.

### Abb. 3: Proteingel Beispiel 6:

4-12% Bis-Tris Gel/MES Puffer, **links:** Marker: Prestained SDS-Page Standards, Auftrag/Slot: 15 µg Pr, **rechts:** nach Sprühtrocknung von Hyrophobin A ohne Hilfsstoff. Abb. 4: Proteingel Beispiel 7:

4-12% Bis-Tris Gel/MES Puffer, **links:** Marker: Prestained SDS-Page Standards, Auftrag/Slot: 15 µg Pr, **mitte/rechts:** nach Sprühtrocknung von Hyrophobin B ohne Hilfsstoff.

### Abb. 5: Proteingel Beispiel 8:

4-12% Bis-Tris Gel/MES Puffer, **links:** Marker: Prestained SDS-Page Standards, Auftrag/Slot: 15 µg Pr, **Rest:** Teile 1-7 nach Sprühgranulierung von Hydrophobin A ohne Hilfsstoff.

### Abb. 6: Proteingel Beispiel 9:

4-12% Bis-Tris Gel/MES Puffer, **links:** Marker: Prestained SDS-Page Standards, Auftrag/Slot: 15 µg Pr, **rechts:** Probe 10 nach Sprühgranulierung von Hydrophobin B ohne Hilfsstoff

## Patentansprüche

1. Verfahren zur Herstellung von trockenen, freifliessenden, stabilen Hydrophobinzub reitungen durch Versprühen und Trocknen von gegebenenfalls Zusatzstoffe enthaltenden wässrigen Hydrophobinlösungen in einer Sprüheinrichtung, **dadurch gekennzeichnet, dass** die Versprühung bei einer Zulufttemperatur zwischen 120 und 200°C erfolgt und / oder dass die Versprühung bei einer Ablufttemperatur zwischen 50 und 120°C erfolgt.

2. Verfahren nach Anspruch 1, **dadurch gekennzeichnet, daß** man die Hydrophobinlösung unter Mitverwendung von 5 bis 200 Gew.%, bezogen auf den Hydrophobin-Feststoffgehalt der Lösung, eines organischen oder anorganischen Sprühhilfsmittels, versprüht und die so erhaltenen, mit Sprühhifsmittel beladenen Teilchen trocknet.

3. Verfahren nach Anspruch 1 zur Herstellung von Hydrophobinzubereitungen in Form von Granulaten, **dadurch gekennzeichnet, dass** zu der Sprüheinrichtung noch ein Wirbelbett verwendet wird.

4. Verfahren nach Anspruch 1, **dadurch gekennzeichnet, dass** als Sprühhilfsmittel ein oder mehreren Zuckeralkohole, Cellulosen oder Stärke verwendet werden.

5. Verfahren nach Anspruch 1, **dadurch gekennzeichnet, dass** als Sprühhilfsmittel Mannit verwendet wird.

## Claims

1. A method for the production of dry, free-flowing, stable hydrophobin preparations by spraying and drying aqueous hydrophobin solutions, optionally comprising additives, in a spray device, wherein the spraying takes place at an inlet air temperature between 120 and 200°C and/or wherein the spraying takes place at an outlet air temperature between 50 and 120°C.

2. The method according to claim 1, wherein the hydrophobin solution is sprayed with co-use of from 5 to 200% by weight, based on the hydrophobin solids content of the solution, of an organic or inorganic spray auxiliary, and the particles laden with spray auxiliaries obtained in this way are dried.

3. The method according to claim 1 for the production of hydrophobin preparations in the form of granules, wherein a fluidized bed is also used in addition to the spray device.

4. The method according to claim 1, wherein one or more sugar alcohols, celluloses or starch are used as spray auxiliaries.

5. The method according to claim 1, wherein mannitol is used as spray auxiliary.

## Revendications

1. Procédé pour la préparation de compositions d'hydrophobine sèches, s'écoulant librement, stables, par pulvérisation et séchage de solutions aqueuses d'hydrophobine contenant le cas échéant des additifs dans un dispositif de pulvérisation, **caractérisé en ce que** la pulvérisation a lieu à une température d'air alimenté entre 120 et 200°C et/ou **en ce que** la pulvérisation a lieu à une température de l'air évacué entre 50 et 120°C.

2. Procédé selon la revendication 1, **caractérisé en ce qu'**on pulvérise la solution d'hydrophobine avec utilisation conjointe de 5 à 200% en poids, par rapport à la teneur en hydrophobine solide de la solution, d'un adjuvant de pulvérisation organique ou inorganique et on sèche les particules chargées d'adjuvant de pulvérisation ainsi obtenues.

3. Procédé selon la revendication 1 pour la préparation de compositions d'hydrophobine sous forme de granulats, **caractérisé en ce qu'**on utilise, en plus du dispositif de pulvérisation, encore un lit fluidisé.

4. Procédé selon la revendication 1, **caractérisé en ce qu'**on utilise, comme adjuvant de pulvérisation, un(e) ou plusieurs alcools de sucre, celluloses ou amidons.

5. Procédé selon la revendication 1, **caractérisé en ce qu'**on utilise, comme adjuvant de pulvérisation, du mannitol.
